# EUROPÄISCHE PATENTANMELDUNG

(11) **EP 0 717 203 A1**
(43) Veröffentlichungstag der Anmeldung: **19.06.1996**
(21) Anmeldenummer: 95114991.3
(22) Anmeldetag: 23.09.1995
(51) Int. Cl.: F16B 13/06

(54) **Spreizanker**

(30) Priorität: 14.12.1994 DE 4444500
(71) Anmelder: fischerwerke Artur Fischer GmbH & Co. KG, D-72178 Waldachtal (DE)
(72) Erfinder: Hein, Bernd, Dipl.-Ing. (FH), D-72290 Freudenstadt (DE); Arnold, Norbert, Dr., D-72178 Waldachtal (DE); Gümpel, Paul, Prof. Dr., D-78351 Bodman-Ludwigshafen (DE)

(57) **Zusammenfassung**

Es wird ein Spreizanker mit einer über einen Teil ihrer Länge geschlitzten Metallspreizhülse (3) und einem einen Spreizkonus (4) aufweisenden Spreizkörper (2) vorgeschlagen, bei dem zumindest der äußere Mantel aus Keramik besteht. Damit wird dauerhaft ein günstiges Gleitverhalten erzielt , das beim Aufspreizen ein Fressen und eine Beschädigung der Gleitfläche des Spreizkörpers verhindert und somit ein sicheres Nachspreizen bei einer Bohrlocherweiterung durch Rißbildung ermöglicht.

## Beschreibung

Die Erfindung betrifft einen Spreizanker mit einer Metallspreizhülse und einem einen Spreizkonus aufweisenden Spreizkörper gemäß der Gattung des Anspruches 1.

Vollständig aus Metall bestehende Spreizanker mit einer über einen Teil ihrer Länge geschlitzten Spreizhülse und einem einen Spreizkonus aufweisenden Spreizkörper, der zur Verankerung des Spreizankers in die Spreizhülse einziehbar ist, sind hinlänglich bekannt. Werden die beiden bei der Verankerung aufeinander gleitenden Teile des Metallspreizankers aus einem gleichen oder ähnlichen Werkstoff hergestellt, kommt es bei einem hohen Spreizdruck während des Verankerungsvorganges zum Fressen der beiden aufeinander gleitenden Flächen. Durch dieses Fressen wird die Funktion des Spreizankers erheblich beeinträchtigt. Ein solcher Anker ist insbesondere für einen Einsatz in der Zugzone ungeeignet, da wegen fehlendem Nachspreizverhalten eine Bohrlocherweiterung durch Rißbildung nicht ausgeglichen werden kann.

Aus diesem Grund ist es bei Metallspreizankern üblich, für die beiden aufeinander gleitenden Metallteile Stähle mit einer unterschiedlichen Gefügestruktur zu verwenden. Da diese jedoch nur in Großmengen herstell- und lieferbar sind, ist diese Möglichkeit insbesondere bei Edelstahlankern nicht immer anwendbar. Desweiteren wird auch keine ausreichende Homogenität in der Gefügestruktur der Stähle erreicht, die mit ausreichender Sicherheit eine Verringerung der Fressneigung bewirkt.

Zur Verringerung der Fressneigung ist es desweiteren bekannt, ein oder beide Metallteile mit einer Beschichtung zu versehen. Diese beispielsweise im Tauchverfahren oder Aufsprühen aufgebrachte Beschichtung ist sehr dünn und wenig widerstandsfähig. Beim Verankerungsvorgang kann demzufolge die Beschichtung abgeschabt werden, so daß sich das Gleitverhalten für das Nachspreizen bei einer Bohrlocherweiterung durch Rißbildung erheblich verschlechtert. Desweiteren ist durch eine solche Beschichtung auch das Langzeitverhalten des Spreizdübels in bezug auf das Nachspreizen nicht sichergestellt.

Der Erfindung liegt die Aufgabe zugrunde, bei einem Spreizanker mit einer mittels eines Spreizkörpers aufspreizbaren Metallspreizhülse dauerhaft ein Gleitverhalten sicherzustellen, das ein Nachspreizen bei einer Bohrlocherweiterung durch Rißbildung ermöglicht.

Die Lösung dieser Aufgabe wird durch die im Anspruch 1 angegebenen Merkmale erreicht. Durch den Keramiküberzug zumindest im Bereich der Mantelfläche des Spreizkörpers wird beim Aufspreizvorgang sowohl ein Fressen als auch ein Abschaben oder eine anderweitige Beschädigung der Gleitfläche verhindert. Es ergibt sich somit ein gleichbleibendes günstiges Gleitverhalten, das auf Dauer ein sicheres Nachspreizen bei einer Bohrlocherweiterung durch Rißbildung gewährleistet.

Aus Korrosionsschutzgründen und zwecks einfacherer Herstellung ist es zweckmäßig, den Spreizkörper vollständig aus einem keramischen Material herzustellen, wobei zur Erhöhung der Bruchfestigkeit insbesondere beim Transport und während der Montage eine aus Stahl bestehende Stützarmierung zweckmäßig ist.

Die Herstellung und Formgebung des Spreizkörpers zumindest des keramischen Teils kann in dem ansich bekannten Pulverspritzgußverfahren erfolgen, bei dem das Keramikpulver mit einem Binder vermischt und in einem Spritzgußwerkzeug geformt wird. Durch anschließendes Entbindern und Sintern ergibt sich die endgültige Form des Spreizkörpers. Weist der Spreizkörper einen aus Stahl bestehenden Kern oder Armierung auf, wird diese als Einlegeteil in das Spritzgußwerkzeug eingebracht. Es ist jedoch auch möglich, den Spreizkörper im Zweikomponenten-Spritzgußverfahren herzustellen, wobei zunächst im Metall-Pulverspritzgußverfahren die Herstellung des Stahlteiles erfolgt und anschließend in Keramik-Pulverspritzgußverfahren das Stahlteil umspritzt wird.

Die Erfindung wird nachfolgend anhand von in der Zeichnung dargestellten Ausführungsbeispielen nähers erläutert.

Es zeigen:
- Figur 1: einen Spreizanker mit Spreizhülse und Spreizkörper,
- Figur 2: einen Spreizkörper mit Stahlkern.

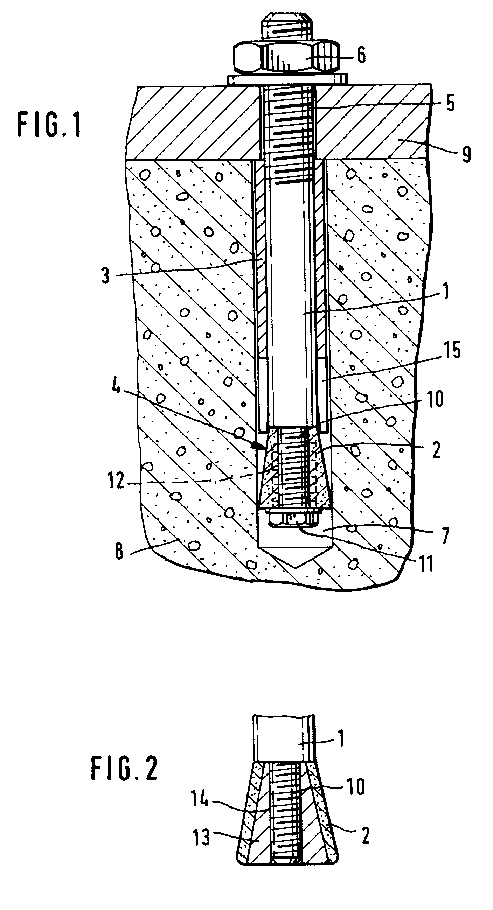

Der in Figur 1 dargestellte Spreizanker besteht aus dem Bolzen 1, an dessen vorderen Ende ein Spreizkörper 2 angebracht ist, und der über einen Teil ihrer Länge Schlitze 15 aufweisenden Spreizhülse 3. Sowohl der Bolzen 1 als auch die Spreizhülse 3 sind vorzugsweise aus einem korrosionsbeständigen Edelstahl bestehende Metallteile. Der aus Keramik bestehende Spreizkörper 2 weist einen Spreizkonus 4 auf, der beim Einziehen des Spreizkörpers 2 mittels der auf das Außengewinde 5 des Bolzens 1 aufgeschraubten Mutter 6 die Spreizhülse 3 aufspreizt. Dadurch wird der Spreizanker im Bohrloch 7 des Bauteiles 8 verankert und gleichzeitig der Gegenstand 9 am Bauteil 8 befestigt. Zum Anbringen des Spreizkörpers 2 am vorderen Ende des Bolzens 1 weist dieser einen im Durchmesser reduzierten Gewindeabschnitt 10 auf, auf den der Spreizkörper 2 aufgesteckt und mit einer Mutter 11 gesichert ist. Bei dem Ausführungsbeispiel nach Figur 1 besteht der Spreizkörper 2 vollständig aus einem kerramischen Material. Bei größeren Abmessungen ist es zweckmäßig, den Spreizkörper 2 mit einer aus Stahl bestehenden Stützarmierung 12 in Form einer Lochblechhülse (gestrichelt dargestellt) zu versehen.

Die Herstellung des Spreizkörpers 2 erfolgt im Keramik-Pulverspritzguß unter Verwendung eines Spritzgußwerkzeuges. Bei diesem Verfahren wird das Keramikpulver in einem beheizten Kneter mit Hilfe polymerorganischer Bindemittel (Wachse, Kunststoffe) plastifiziert und anschließend granuliert. Auf einer herkömmlichen Spritzgußmaschine wird der Spreizkörper unter Berücksichtigung des Schwundmaßes in einem Spritzgußwerkzeug abgespritzt. Nach dem Entbindern und Sintern weist der Spreizkörper seine endgültige Form auf. Ist für den Spreizkörper 2 eine Stützarmierung 12 vorgesehen, wird diese aus Stahl bestehende Stützarmierung als Einlegeteil in die Form des Spritzgußwerkzeuges vor dem Spritzvorgang eingelegt.

Bei dem in Figur 2 dargestellten Ausführungsbeispiel besitzt der Spreizkörper 2 einen Stahlkern 13, der zum Aufschrauben auf den Gewindeabschnitt 10 des Bolzens 1 ein Innengewinde 14 aufweist. Somit besteht nur die als Gleitfläche dienende Außenschicht des Spreizkörpers 2 aus Keramik. Die Herstellung dieses Spreizkörpers kann im Zweikomponenten-Spritzgußverfahren erfolgen, wobei im ersten Spritzgang im Metallpulver-Spritzgußverfahren der Stahlkern erstellt und im zweiten Spritzgang die aus Keramik bestehende Außenschicht aufgespritzt wird. Durch Verwendung des gleichen Binders für beide Spritzgußteile kann der Spreizkörper in einem Arbeitsgang entbindert und gesintert werden.

## Patentansprüche

1. Spreizanker mit einer über einen Teil ihrer Länge geschlitzen Metallspreizhülse, die zur Verankerung des Spreizankers mittels eines einen Spreizkonus aufweisenden Spreizkörpers aufspreizbar ist, **dadurch gekennzeichnet,** daß wenigstens der äußere Mantel des Spreizkörpers (2) aus Keramik besteht.

2. Spreizanker nach Anspruch 1, **dadurch gekennzeichnet,** daß der Spreizkörper (2) vollständig aus einem keramischen Material besteht.

3. Spreizanker nach Anspruch 2, **dadurch gekennzeichnet,** daß der Spreizkörper (2) eine aus Stahl bestehende Stützarmierung (12) aufweist.

4. Spreizanker nach Anspruch 1, **dadurch gekennzeichnet,** daß der Spreizkörper (2) einen mit einer Gewindebohrung (14) versehenen Stahlkern (13) aufweist.

5. Verfahren zur Herstellung eines Spreizdübels mit einer über einen Teil seiner Länge geschlitzten Spreizhülse und einem zumindest teilweise aus keramischen Material bestehenden Spreizkörper gemäß einem der vorhergehenden Ansprüche, **dadurch gekennzeichnet,** daß zumindest der keramische Teil des Spreizkörpers im Pulverspritzgußverfahren hergestellt wird.
